# EUROPÄISCHE PATENTSCHRIFT

(11) **EP 3 959 960 B1**
(45) Veröffentlichungstag und Bekanntmachung des Hinweises auf die Patenterteilung: **12.03.2025**
(21) Anmeldenummer: 21193809.7
(22) Anmeldetag: 30.08.2021
(51) Int. Cl.: A01D 75/20, A01B 79/00

(54) **LANDWIRTSCHAFTLICHES ARBEITSGERÄT**
AGRICULTURAL TOOL
APPAREIL DE TRAVAIL AGRICOLE

(30) Priorität: 31.08.2020 AT 507322020
(43) Veröffentlichungstag der Anmeldung: 02.03.2022
(73) Patentinhaber: Pöttinger Landtechnik GmbH, 4710 Grieskirchen (AT)
(72) Erfinder: EDELBAUER, Roland, 4600 Thalheim (AT); EDER, Robert, 4712 Michaelnbach (AT); LINDINGER, Christian, 4632 Pichl bei Wels (AT); MEINGASSNER, Wolfgang Michael, 4655 Vorchdorf (AT)
(74) Vertreter: Burger, Hannes

(56) Entgegenhaltungen:
- WO-A1-95/10933
- DE-A1- 10 244 822
- DE-A1- 102011 102 760
- DE-A1- 19 718 110
- DE-A1- 3 531 392

## Beschreibung

Die Erfindung betrifft ein Landwirtschaftliches Arbeitsgerät mit zumindest einem Arbeitsaggregat und einer Erfassungseinrichtung zum Erfassen von Lebewesen in der Arbeitsbahn des Arbeitsaggregats, sowie ein Verfahren zum Betreiben des landwirtschaftlichen Arbeitsgeräts.

Bei der Grünlandbearbeitung ist für einen Maschinenführer oft schwer zu erkennen, ob sich ein Tier in der Arbeitsbahn befindet, da sich das Tier bei Annäherung einer Schlepper-Anbaugeräte-Kombination oft vor Schreck duckt und bewegungslos verharrt, so dass es im noch ungemähten Erntegut, beispielsweise höherem Gras kaum zu erkennen ist. Dies ist besonders bei landwirtschaftlichen Arbeitsgeräten schwierig, die noch ungemähtes Erntegut verarbeiten, wie beispielsweise Mähmaschinen, da hier die Tiere besonders schwer zu erkennen sind. Das genannte Problem kann grundsätzlich aber auch bei anderen Arbeitsaggregaten ein auftreten.

Um die Tiere vor Maschinenberührung und entsprechenden Verletzungen zu schützen, umgekehrt aber auch die Maschinen vor Wildschaden zu schützen, werden daher zunehmend Erfassungseinrichtungen an dem jeweiligen Arbeitsgerät oder auch an dem das Arbeitsgerät ziehenden oder schiebenden Schlepper eingesetzt. Die Erfassungseinrichtung dient dazu, um Tiere in der Arbeitsbahn der Arbeitsaggregate automatisch zu erfassen und ein Warnsignal abzusetzen bzw. ggf. auch die Arbeitsaggregate zu stoppen. Entsprechende Sensoren tasten hierbei den Boden bzw. den zu bearbeitenden Arbeitskorridor ab, wobei mittels Auswerteeinheiten versucht wird, aus bestimmten Signalmustern eine Tiererkennung abzuleiten. Dies ist jedoch schwierig, da die Abtastsignale auf diverse Umgebungseinflüsse reagieren, was es schwierig macht, durch Tiere bedingte Signalausschläge von anderen Signalausschlägen zu unterscheiden. Dies gilt in erhöhtem Maße bei Arbeitsgeräten, die noch ungeschnittenes Erntegut bearbeiten, da von dem noch stehenden Erntegut diverse Signalreflexionen erzeugt und durch zusätzliche, die Bodenkontur widerspiegelnde Signalreflexionen überlagert werden. Gleichermaßen treten solche Probleme jedoch auch auf, wenn sich ein Tier in einem beispielsweise großen, zusammengerechten Schwad versteckt.

In der EP3183950A1 ist ein gattungsgemäßes landwirtschaftliches Arbeitsgerät mit einer Erfassungseinrichtung zum Erfassen von Lebewesen offenbart. Die EP3183950A1 beschäftigt sich schon mit der oben genannten Problemstellung.

Das in der EP3183950A1 offenbarte landwirtschaftliche Arbeitsgerät weist den Nachteil auf, dass aufgrund der Sensoranordnung die maximal mögliche Arbeitsgeschwindigkeit begrenzt ist.

Die WO 9510933 A1 offenbart ein Landwirtschaftliches Arbeitsgerät mit zumindest einem Arbeitsaggregat und einer Erfassungseinrichtung zum Erfassen von Lebewesen in einer Arbeitsbahn des Arbeitsaggregats, wobei die Erfassungseinrichtung zumindest einen Sensor zum Abtasten der Arbeitsbahn des Arbeitsaggregats und eine Auswerteeinheit zum Auswerten des Signals des Sensors aufweist. Weiters ist eine Energieemissionsvorrichtung ausgebildet, welche zum Aufschrecken des Lebewesens dient, wobei ein energiebehaftetes Signal erst dann emittiert wird, wenn vom Sensor ein Lebewesen erfasst wird.

Aufgabe der vorliegenden Erfindung war es, die Nachteile des Standes der Technik zu überwinden und eine Vorrichtung und ein Verfahren zur Verfügung zu stellen, mittels derer eine sichere Erfassung von Lebewesen bei gleichzeitig erhöhter Arbeitsgeschwindigkeit möglich ist.

Diese Aufgabe wird durch eine Vorrichtung und ein Verfahren gemäß den Ansprüchen gelöst.

Erfindungsgemäß ist ein landwirtschaftliches Arbeitsgerät mit zumindest einem Arbeitsaggregat und einer Erfassungseinrichtung zum Erfassen von Lebewesen in der Arbeitsbahn des Arbeitsaggregats ausgebildet. Die Erfassungseinrichtung weist zumindest einen Sensor zum Abtasten der Arbeitsbahn des Arbeitsaggregats auf. Weiters ist eine Energieemissionsvorrichtung ausgebildet ist, welche zum Aufschrecken des Lebewesens dient. Weiters kann die Erfassungseinrichtung eine Auswerteeinheit zum Auswerten des Signals des Sensors zur Lebewesenerkennung umfassen. Weiters kann vorgesehen sein, dass eine Recheneinheit ausgebildet ist, mit welcher die Energieemissionsvorrichtung und der Sensor gekoppelt sind. Ferner kann vorgesehen sein, dass das landwirtschaftliche Arbeitsgerät derart ausgebildet ist, dass mittels der Energieemissionsvorrichtung ein energiebehaftetes Signal emittierbar ist, welches zum Aufschrecken des Lebewesens dient, sodass dieses vom Sensor erfassbar ist. Insbesondere kann vorgesehen sein, dass die Recheneinheit derart konfiguriert ist, dass bei einer aktivierten Erfassungseinrichtung das energiebehaftete Signal während eines Arbeitsvorganges andauernd emittiert wird. Zusätzlich kann vorgesehen sein, dass das Signal des Sensors während des Arbeitsvorganges andauernd mittels einer Auswerteeinheit auf das Vorhandensein eines Lebewesens ausgewertet wird.

Das erfindungsgemäße landwirtschaftliche Arbeitsgerät bringt den Vorteil mit sich, dass durch das andauernde Abgeben eines Signals der Energieemissionsvorrichtung die Lebewesen aufgeschreckt werden, um somit leichter von der Erfassungseinrichtung erkannt werden zu können. Somit ist es möglich, das landwirtschaftliche Arbeitsgerät mit einer erhöhten Geschwindigkeit zu betreiben und dabei gleichzeitig keine Einbußen in der Erfassungsqualität zu erleiden. Durch die kombinierte Ausführung der Energieemissionsvorrichtung mit der Erfassungseinrichtung ist es nicht notwendig, dass die Lebewesen komplett aus ihrem Unterschlupf im zu bearbeitenden Feld vertrieben werden, sondern reicht es aus, wenn durch die Energieemissionsvorrichtung die Lebewesen nur kurz aufgeschreckt werden, sodass sie von der Erfassungseinrichtung erfasst werden können. Dadurch kann ein arbeitsaufwendiges Absuchen des Feldes vor dem Ernteeinsatz vermieden werden.

Weiters kann es zweckmäßig sein, wenn die Energieemissionsvorrichtung eine Schallemissionsvorrichtung umfasst. Besonders eine Schallemissionsvorrichtung ist gut dazu geeignet, um Lebewesen, wie etwa Rehkitze, aufscheuchen zu können.

Ferner kann vorgesehen sein, dass die Schallemissionsvorrichtung zur Abgabe einer Schallemission im Ultraschallbereich ausgebildet ist. Besonders bei einer Schallemission im Ultraschallbereich können jene auf den Feldern lebenden Lebewesen, welche am meisten gefährdet sind, wie etwa Rehkitze, Hasen und dergleichen, besonders gut aufgescheucht werden. Somit können diese Lebewesen mittels der Erfassungseinrichtung einfach erfasst werden.

Darüber hinaus kann vorgesehen sein, dass die Schallemissionsvorrichtung zur Abgabe einer Schallemission mit einer Frequenz zwischen 13 kHz und 100 kHz, insbesondere zwischen 20 kHz und 65 kHz, bevorzugt zwischen 20 kHz und 50 kHz ausgebildet ist. Besonders bei einer Schallemission in diesem Frequenzbereich können jene auf den Feldern lebenden Lebewesen, welche am meisten gefährdet sind, wie etwa Rehkitze, Hasen und dergleichen, besonders gut aufgescheucht werden. Somit können diese Lebewesen mittels der Erfassungseinrichtung einfach erfasst werden.

Vorteilhaft ist auch eine Ausprägung, gemäß welcher vorgesehen sein kann, dass die Energieemissionsvorrichtung eine Lichtemissionsvorrichtung zur Emission von optischen Signalen umfasst. Besonders bei einer Lichtemission können jene auf den Feldern lebenden Lebewesen, welche am meisten gefährdet sind, wie etwa Rehkitze, Hasen und dergleichen, besonders gut aufgescheucht werden. Somit können diese Lebewesen mittels der Erfassungseinrichtung einfach erfasst werden.

Gemäß einer Weiterbildung ist es möglich, dass eine Mehrzahl von Erfassungseinrichtungen mit jeweils zumindest einem Sensor zum Abtasten jeweils einer Arbeitsbahn jeweils eines Arbeitsaggregats ausgebildet ist, wobei jeder der Erfassungseinrichtungen eine Energieemissionsvorrichtung zugeordnet ist. Dies bringt den Vorteil mit sich, dass bei mehreren am landwirtschaftlichen Arbeitsgerät verbauten Arbeitsaggregaten erreicht werden kann, dass für jedes der Arbeitsaggregate eine gute Detektion von Lebewesen erreicht werden kann.

Weiters kann vorgesehen sein, dass die Energieemissionsvorrichtung eine Lichtemissionsvorrichtung zur Emission von optischen Signalen umfasst und eine Schallemissionsvorrichtung umfasst, wobei die Energieemissionsvorrichtung zur zeitgleichen Abgabe eines optischen Signales und eines akustischen Signales ausgebildet ist. Besonders die zeitgleiche Abgabe eines optischen Signals und eines akustischen Signals bringt eine überraschende Effizienz beim Aufschrecken der Lebewesen mit sich.

Gemäß einer Weiterbildung ist es möglich, dass eine Mehrzahl von Erfassungseinrichtungen mit jeweils zumindest einem Sensor zum Abtasten jeweils einer Arbeitsbahn des jeweiligen Arbeitsaggregats ausgebildet ist, wobei jeder der Erfassungseinrichtungen eine Energieemissionsvorrichtung zugeordnet ist.

Ferner kann es zweckmäßig sein, wenn die Erfassungseinrichtung und die Energieemissionsvorrichtung an einer gemeinsamen Trägereinheit angeordnet sind, welche koppelbar am landwirtschaftlichen Arbeitsgerät angeordnet ist. Dies bringt den Vorteil mit sich, dass das landwirtschaftliche Arbeitsgerät einfach mit der Erfassungseinrichtung bzw. der Energieemissionseinrichtung ausgestattet werden kann. Insbesondere ist es hierbei vereinfacht möglich, die Erfassungseinrichtung und die Energieemissionseinrichtung in richtiger Position relativ zueinander anzuordnen, um die Effizienz des Erkennens von Lebewesen weiter zu verbessern.

Weiters kann vorgesehen sein, dass die Energieemissionsvorrichtung in Fahrtrichtung des Landwirtschaftlichen Arbeitsgerätes gesehen nach vorne gerichtet ist.

Weiters kann vorgesehen sein, dass der Sensor einen Abtastbereich von +/-10° bis +/-65° mit einer nach unten gerichteten Hauptabtastrichtung aufweist. Die genannte Hauptabtastrichtung kann dabei im Wesentlichen senkrecht nach unten auf den Boden oder ggf. auch leicht spitzwinklig zur Vertikalen geneigt sein, wobei der Abtastbereich mit den genannten Winkeln +/-10° bis +/-65° vorzugsweise symmetrisch um die genannte Hauptabtastrichtung herum vorgesehen sein kann.

Vorteilhafterweise kann der Sensor einen Abtastbereich von +/-35° bis +/-55° aufweisen und die Senkrechte nach unten einschließen. Wenn die Hauptabtastrichtung mit der Senkrechten zusammenfällt, kann der Sensor +/-35° bis +/-55°, insbesondere etwa +/-45° um die Senkrechte herum abtasten.

Der Sensor kann den genannten Abtastbereich von beispielsweise +/-45° bei starrer Sensorausrichtung durch Aussenden eines sich entsprechend aufweitenden elektromagnetischen Wellenkegels von beispielsweise +/-45° und/oder einem Scan-Bereich, der einlaufende elektromagnetische Wellen bzw. Lichtwellen in einem entsprechenden Winkelbereich erfasst, realisieren. Alternativ oder zusätzlich kann der Sensor hin- und herbewegt bzw. zyklisch bewegt werden, um den genannten Abtastbereich abzufahren.

Darüber hinaus kann vorgesehen sein, dass eine Abstrahlrichtung der Energieemissionsvorrichtung in einem Winkel zwischen 1° und 45°, insbesondere zwischen 5° und 35°, bevorzugt zwischen 10° und 20° zur Horizontalen ausgebildet ist. Besonders eine in einem derartigen Winkel angeordnete Energieemissionsvorrichtung führt zu einer effizienten Aufschreckung von Lebewesen, sodass diese mit hoher Sicherheit von der Erfassungseinrichtung erkannt werden können.

Weiters kann vorgesehen sein, dass ein Differenzwinkel zwischen einer Abstrahlrichtung der Energieemissionsvorrichtung und einer Hauptabtastrichtung der Erfassungseinrichtung zwischen 50° und 85°, insbesondere zwischen 60° und 83°, bevorzugt zwischen 70° und 80° beträgt. Besonders bei einem derartigen Differenzwinkel können Lebewesen besonders effizient erfasst werden, da sie noch aufgescheucht sind, wenn sie in den Erfassungsbereich der Erfassungseinrichtung gelangen.

Erfindungsgemäß ist ein Verfahren zum Betreiben eines landwirtschaftlichen Arbeitsgeräts mit zumindest einem Arbeitsaggregat und einer Erfassungseinrichtung zum Erfassen von Lebewesen in einer Arbeitsbahn des Arbeitsaggregats vorgesehen, wobei die Erfassungseinrichtung zumindest einen Sensor zum Abtasten der Arbeitsbahn des Arbeitsaggregats und eine Auswerteeinheit zum Auswerten des Signals des Sensors aufweist, wobei während einer Fahrbewegung des Arbeitsgerätes mittels der Erfassungseinrichtung die Arbeitsbahn abgetastet und das Signal des Sensors mittels einer Auswerteeinheit auf das Vorhandensein eines Lebewesens ausgewertet wird. Mittels einer Energieemissionsvorrichtung wird ein energiebehaftetes Signal emittiert, welches zum Aufschrecken des Lebewesens dient, sodass dieses vom Sensor erfasst werden kann. Insbesondere kann das Signal des Sensors mittels einer Auswerteeinheit auf das Vorhandensein eines Lebewesens ausgewertet werden. Insbesondere kann vorgesehen sein, dass das energiebehaftete Signal während eines Arbeitsvorganges andauernd emittiert wird. Zusätzlich kann vorgesehen sein, dass das Signal des Sensors während des Arbeitsvorganges andauernd mittels einer Auswerteeinheit auf das Vorhandensein eines Lebewesens ausgewertet wird.

Das erfindungsgemäße Verfahren bringt den Vorteil mit sich, dass durch die Energieemissionsvorrichtung die Lebewesen aufgeschreckt werden, um somit leichter von der Erfassungseinrichtung erkannt werden zu können. Somit ist es möglich, das landwirtschaftliche Arbeitsgerät mit einer erhöhten Geschwindigkeit zu betreiben und dabei gleichzeitig keine Einbußen in der Erfassungsqualität zu erleiden. Durch die kombinierte Ausführung der Energieemissionsvorrichtung mit der Erfassungseinrichtung ist es nicht notwendig, dass die Lebewesen komplett aus ihrem Unterschlupf im zu bearbeitenden Feld vertrieben werden, sondern reicht es aus, wenn durch die Energieemissionsvorrichtung die Lebewesen nur kurz aufgeschreckt werden, sodass sie von der Erfassungseinrichtung erfasst werden können. Dadurch kann ein arbeitsaufwendiges Absuchen des Feldes vor dem Ernteeinsatz vermieden werden.

Als Energieemissionsvorrichtung im Sinne dieses Dokumentes wird eine Vorrichtung angesehen, welche eigens dazu ausgebildet ist, um eine definierte Energieemission abzugeben, welche zum Aufschrecken von Lebewesen dient. Als Energieemissionsvorrichtung im Sinne dieses Dokumentes wird nicht der Motor des landwirtschaftlichen Arbeitsgerätes und auch nicht ein Arbeitsaggregat angesehen, welches eine durch die Arbeitsweise bedingte "Energieemission" abgibt.

Als Lebewesen im Sinne dieses Dokumentes werden vorzugsweise Lebewesen gesehen, welche eine Größe aufweisen, die groß genug ist, so dass sie durch das Arbeitsaggregat verletzt werden können, bzw. durch die das Arbeitsaggregat beschädigt werden kann. Dies sind beispielsweise Säugetiere, wie etwa Rehkitze, Hasen, Wildschweine, Hunde, Katzen und dergleichen. Dies können auch Vögel, wie etwa Fasane, Hühner und dergleichen sein.

Eine Recheneinheit im Sinne dieses Dokumentes kann ein Digitalrechner sein. Weiters ist es auch denkbar, dass eine Recheneinheit im Sinne dieses Dokumentes eine einfache elektrische Schaltung ist. Insbesondere kann vorgesehen sein, dass die Recheneinheit dazu ausgebildet ist, die Energieemissionsvorrichtung, die Auswerteeinheit und den Sensor bei Start eines Arbeitsvorganges zu aktivieren.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Draufsicht auf ein erstes Ausführungsbeispiel eines landwirtschaftlichen Arbeitsgerätes;
- Fig. 2: eine schematische Draufsicht auf ein zweites Ausführungsbeispiel eines landwirtschaftlichen Arbeitsgerätes;
- Fig. 3: eine schematische Draufsicht auf ein drittes Ausführungsbeispiel eines landwirtschaftlichen Arbeitsgerätes;
- Fig. 4: eine schematische Seitenansicht eines vierten Ausführungsbeispiels eines landwirtschaftlichen Arbeitsgerätes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

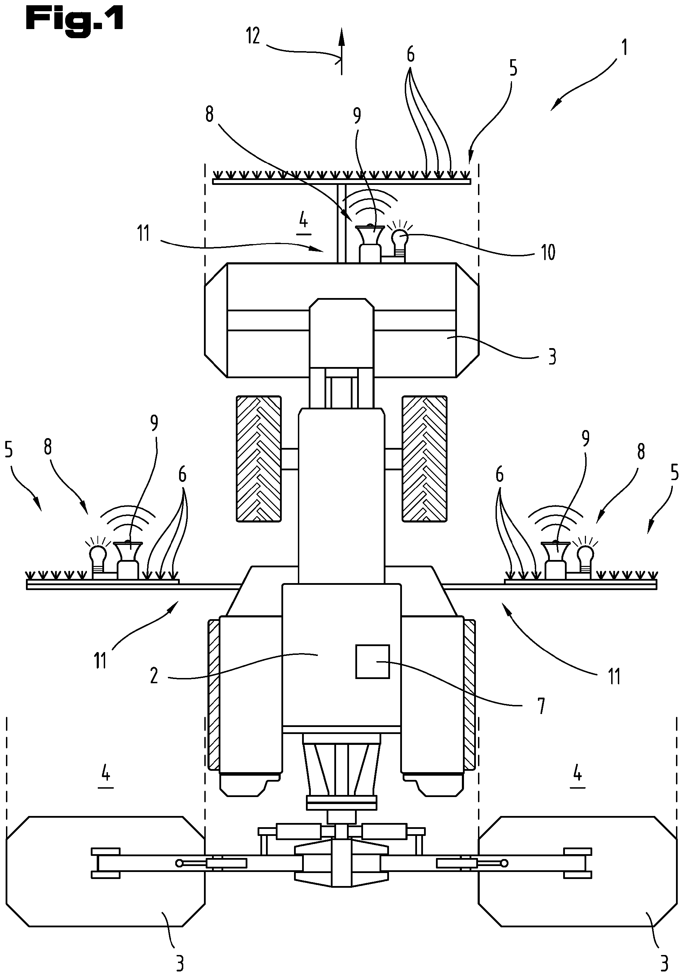

Fig. 1 zeigt eine schematische Draufsicht auf ein landwirtschaftliches Arbeitsgerät 1.

Im vorliegenden Ausführungsbeispiel umfasst das landwirtschaftliche Arbeitsgerät 1 eine Zugmaschine 2, an welcher mehrere Arbeitsaggregate 3 gekoppelt sind. Im vorliegenden Ausführungsbeispiel sind die Arbeitsaggregate 3 beispielsweise ein Frontmähwerk, welches vor der Zugmaschine 2 angeordnet ist und zwei Heckmähwerke welche hinter der Zugmaschine 2 angeordnet sind. Jedes der Arbeitsaggregate 3 wird entlang einer Arbeitsbahn 4 geführt, in welcher es die Erntefläche bearbeitet. Weiters ist eine Erfassungseinrichtung 5 zum Erfassen von Lebewesen in der Arbeitsbahn 4 des Arbeitsaggregats 3 ausgebildet. Wie aus Fig. 1 ersichtlich, kann vorgesehen sein, dass für jedes der Arbeitsaggregate 3 eine eigene Erfassungseinrichtung 5 ausgebildet ist.

Die Erfassungseinrichtungen 5 umfassen jeweils mehrere Sensoren 6, welche zum Abtasten der Arbeitsbahn 4 des Arbeitsaggregats 3 dienen. Weiters ist eine Auswerteeinheit 7 ausgebildet, welche das Signal des Sensors 6 auswertet und welche zum Erkennen der Lebewesen dient.

Weiters ist im vorliegenden Ausführungsbeispiel für jedes der Arbeitsaggregate 3 eine Energieemissionsvorrichtung 8 ausgebildet, welche zum Abstrahlen von Energie dient, sodass die Lebewesen, welche sich im Feld verstecken, aufgeschreckt werden können. Im vorliegenden Ausführungsbeispiel umfasst die Energieemissionsvorrichtung 8 eine Schallemissionsvorrichtung 9. Weiters umfasst die Energieemissionsvorrichtung 8 im vorliegenden Ausführungsbeispiel eine Lichtemissionsvorrichtung 10.

Wie aus Fig. 1 weiters ersichtlich, kann vorgesehen sein, dass eine Trägereinheit 11 ausgebildet ist, welche mit der Zugmaschine 2 oder mit dem Arbeitsaggregat 3 gekoppelt ist, wobei an der Trägereinheit 11 die Erfassungseinrichtung 5 und die Energieemissionsvorrichtung 8 angeordnet sind. Durch die gemeinsame Trägereinheit 11 können die Erfassungseinrichtung 5 und die Energieemissionsvorrichtung 8 einfach mit dem Arbeitsaggregat 3 bzw. der Zugmaschine 2 gekoppelt werden.

Wie aus Fig. 1 weiters ersichtlich, kann vorgesehen sein, dass die Erfassungseinrichtung 5 bzw. die Energieemissionsvorrichtung 8 jeweils in einer Fahrtrichtung 12 vor dem Arbeitsaggregat 3 angeordnet sind.

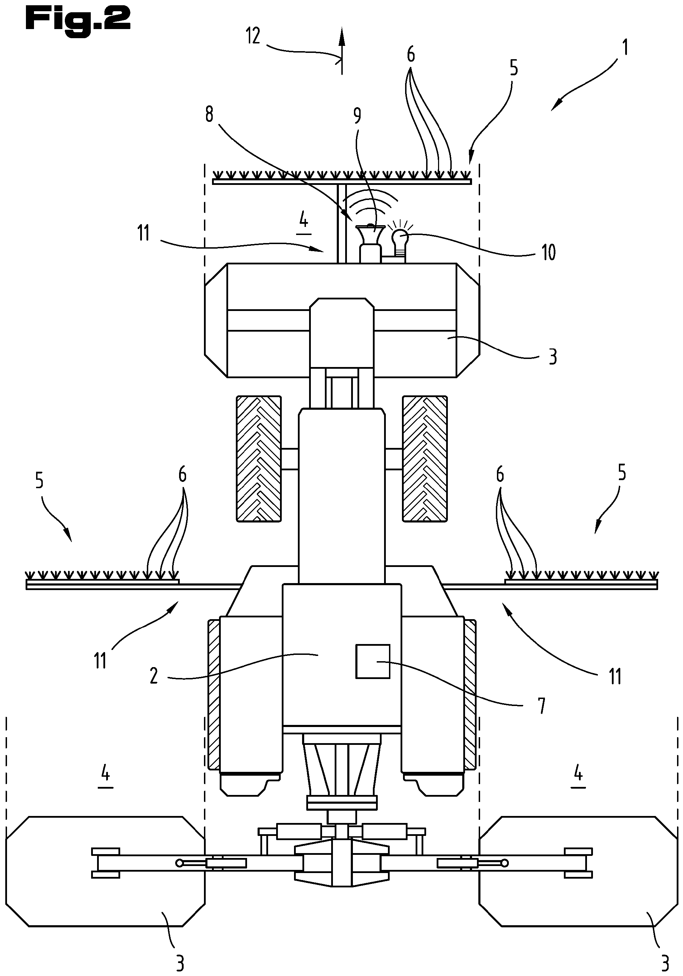

In der Fig. 2 ist eine weitere und gegebenenfalls für sich eigenständige Ausführungsform des landwirtschaftlichen Arbeitsgerätes 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in den vorangegangenen Fig. 1 hingewiesen bzw. Bezug genommen.

Wie aus Fig. 2 ersichtlich, kann vorgesehen sein, dass nur eine Energieemissionsvorrichtung 8 ausgebildet ist, welche für mehrere Erfassungseinrichtungen 5 dient. Eine derartige Ausführung kann besonders bei landwirtschaftlichen Arbeitsgeräten 1 mit einer hohen Arbeitsgeschwindigkeit sinnvoll sein, um durch den vereinfachten Aufbau Kosten zu sparen und die Komplexität des Systems möglichst gering zu halten. Bei landwirtschaftlichen Arbeitsgeräten 1 mit einer niedrigen Bearbeitungsgeschwindigkeit kann bei einer derartigen Ausführungsform jedoch die Gefahr auftreten, dass das Lebewesen zwar durch die Energieemissionsvorrichtung 8 aufgeschreckt wird, allerdings bis zu dem Zeitpunkt, wo das Lebewesen im Erfassungsbereich der Erfassungseinrichtung 5 sein würde, sich das Lebewesen bereits wieder im Gras versteckt hat.

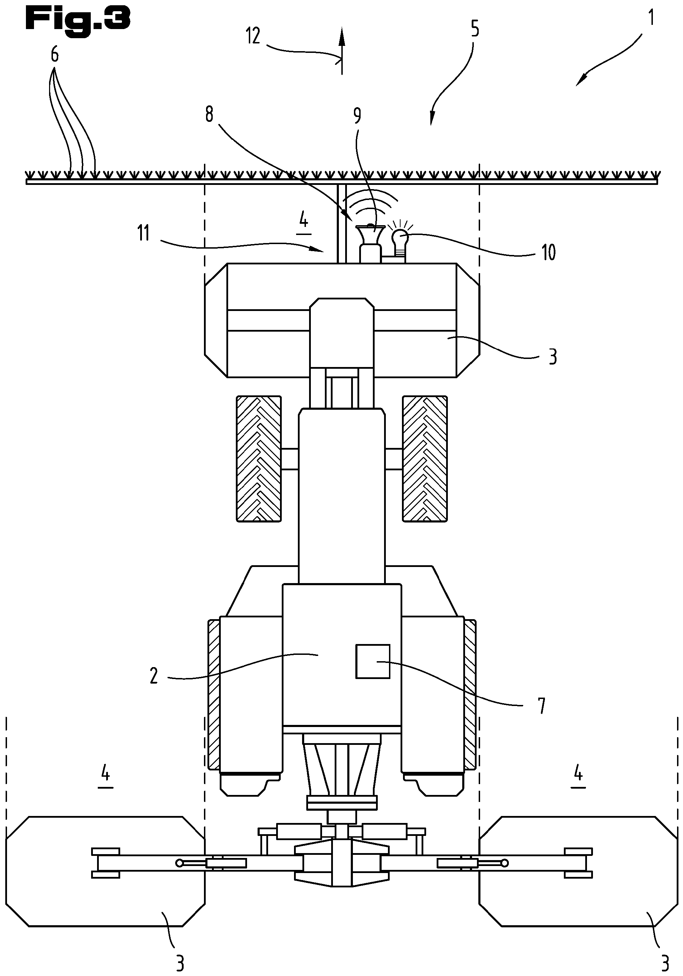

In der Fig. 3 ist eine weitere und gegebenenfalls für sich eigenständige Ausführungsform des landwirtschaftlichen Arbeitsgerätes 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass die Erfassungseinrichtung 5 eine derart große Breite aufweist, dass sowohl ein vor der Zugmaschine 2 angeordnetes Arbeitsaggregat 3, als auch hinter der Zugmaschine 2 angeordnete Arbeitsaggregate 3 von der Erfassungseinrichtung 5 abgedeckt werden können.

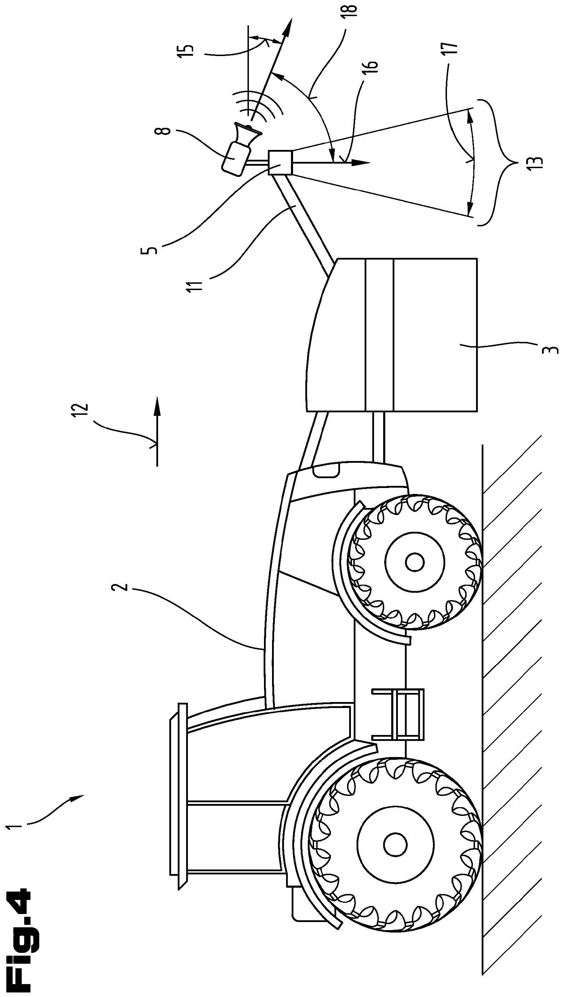

In der Fig. 4 ist eine weitere und gegebenenfalls für sich eigenständige Ausführungsform des landwirtschaftlichen Arbeitsgerätes 1 in einer Seitenansicht gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass die Erfassungseinrichtung 5 bzw. die Energieemissionsvorrichtung 8 mittels der Trägereinheit 11 mit dem Arbeitsaggregat 3 gekoppelt ist. Die Trägereinheit 11 ist hierbei in Fahrtrichtung 12 gesehen, an einer Vorderseite des Arbeitsaggregates 3 angeordnet, sodass ein Erfassungsbereich 13 der Erfassungseinrichtung 5 in Fahrtrichtung 12 gesehen vor dem Arbeitsaggregat 3 liegt. Die Energieemissionsvorrichtung 8 weist eine Abstrahlrichtung 14 auf, wobei die Abstrahlrichtung 14 jene Richtung mit der größten Energieintensität der Energieemission ist. In der Praxis ist natürlich vorgesehen, dass das abgestrahlte Signal kein linienförmiges bzw. über die Breite des Arbeitsgrätes 1 gesehen flächiges Signal ist, sondern dass das Signal um die Abstrahlrichtung 14 eine gewisse Öffnungsbreite bzw. Streuung aufweist.

Die Abstrahlrichtung 14 ist in einem Winkel 15 zur Horizontalen angeordnet. Die Erfassungseinrichtung 5, respektive die Sensoren 6, weisen ebenfalls eine Hauptabtastrichtung 16 auf, wobei ein Abtastbereich 17 um die Hauptabtastrichtung 16 ausgebildet ist. Insbesondere kann vorgesehen sein, dass der Abtastbereich 17 symmetrisch um die Hauptabtastrichtung 16 ausgebildet ist. Wie aus Fig. 4 weiters ersichtlich, kann vorgesehen sein, dass die Abstrahlrichtung 14 der Energieemissionsvorrichtung 8 und die Hauptabtastrichtung 16 der Erfassungseinrichtung 5 in einem Differenzwinkel 18 zueinander angeordnet sind.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Landwirtschaftliches Arbeitsgerät
- 2: Zugmaschine
- 3: Arbeitsaggregat
- 4: Arbeitsbahn
- 5: Erfassungseinrichtung
- 6: Sensor
- 7: Auswerteeinheit
- 8: Energieemissionsvorrichtung
- 9: Schallemissionsvorrichtung
- 10: Lichtemissionsvorrichtung
- 11: Trägereinheit
- 12: Fahrtrichtung
- 13: Erfassungsbereich
- 14: Abstrahlrichtung
- 15: Winkel Abstrahlrichtung
- 16: Hauptabtastrichtung
- 17: Abtastbereich
- 18: Differenzwinkel

## Patentansprüche

1. Landwirtschaftliches Arbeitsgerät (1) mit zumindest einem Arbeitsaggregat (3) und einer Erfassungseinrichtung (5) zum Erfassen von Lebewesen in einer Arbeitsbahn (4) des Arbeitsaggregats (3), wobei die Erfassungseinrichtung (5) zumindest einen Sensor (6) zum Abtasten der Arbeitsbahn (4) des Arbeitsaggregats (3) aufweist, wobei eine Energieemissionsvorrichtung (8) ausgebildet ist, welche zum Aufschrecken des Lebewesens dient, **dadurch gekennzeichnet, dass** das landwirtschaftliche Arbeitsgerät (1) derart ausgebildet ist, dass mittels der Energieemissionsvorrichtung (8) ein energiebehaftetes Signal emittiert wird, welches zum Aufschrecken des Lebewesens dient, sodass dieses vom Sensor (6) erfasst werden kann.

2. Landwirtschaftliches Arbeitsgerät (1) nach Anspruch 1, **dadurch gekennzeichnet, dass** die Energieemissionsvorrichtung (8) eine Schallemissionsvorrichtung (9) umfasst.

3. Landwirtschaftliches Arbeitsgerät (1) nach Anspruch 2, **dadurch gekennzeichnet, dass** die Schallemissionsvorrichtung (9) zur Abgabe einer Schallemission im Ultraschallbereich ausgebildet ist.

4. Landwirtschaftliches Arbeitsgerät (1) nach Anspruch 2 oder 3, **dadurch gekennzeichnet, dass** die Schallemissionsvorrichtung (9) zur Abgabe einer Schallemission mit einer Frequenz zwischen 13 kHz und 100 kHz, insbesondere zwischen 20 kHz und 65 kHz, bevorzugt zwischen 20 kHz und 50 kHz ausgebildet ist.

5. Landwirtschaftliches Arbeitsgerät (1) nach einem der vorhergehenden Ansprüche, **dadurch gekennzeichnet, dass** die Energieemissionsvorrichtung (8) eine Lichtemissionsvorrichtung (10) zur Emission von optischen Signalen umfasst.

6. Landwirtschaftliches Arbeitsgerät (1) nach einem der vorhergehenden Ansprüche, **dadurch gekennzeichnet, dass** eine Mehrzahl von Erfassungseinrichtungen (5) mit jeweils zumindest einem Sensor (6) zum Abtasten jeweils einer Arbeitsbahn (4) jeweils eines Arbeitsaggregats (3) ausgebildet ist, wobei jeder der Erfassungseinrichtungen (5) eine Energieemissionsvorrichtung (8) zugeordnet ist.

7. Landwirtschaftliches Arbeitsgerät (1) nach einem der vorhergehenden Ansprüche, **dadurch gekennzeichnet, dass** die Erfassungseinrichtung (5) und die Energieemissionsvorrichtung (8) an einer gemeinsamen Trägereinheit (11) angeordnet sind, welche koppelbar am landwirtschaftlichen Arbeitsgerät angeordnet ist.

8. Landwirtschaftliches Arbeitsgerät (1) nach einem der vorhergehenden Ansprüche, **dadurch gekennzeichnet, dass** eine Abstrahlrichtung (14) der Energieemissionsvorrichtung (8) in einem Winkel (15) zwischen 1° und 45°, insbesondere zwischen 5° und 35°, bevorzugt zwischen 10° und 20° zur Horizontalen ausgebildet ist.

9. Landwirtschaftliches Arbeitsgerät (1) nach einem der vorhergehenden Ansprüche, **dadurch gekennzeichnet, dass** ein Differenzwinkel (18) zwischen einer Abstrahlrichtung (14) der Energieemissionsvorrichtung (8) und einer Hauptabtastrichtung (16) der Erfassungseinrichtung (5) zwischen 50° und 85°, insbesondere zwischen 60° und 83°, bevorzugt zwischen 70° und 80° beträgt.

10. Verfahren zum Betreiben eines landwirtschaftlichen Arbeitsgeräts mit zumindest einem Arbeitsaggregat (3) und einer Erfassungseinrichtung (5) zum Erfassen von Lebewesen in einer Arbeitsbahn (4) des Arbeitsaggregats (3), wobei die Erfassungseinrichtung (5) zumindest einen Sensor (6) zum Abtasten der Arbeitsbahn (4) des Arbeitsaggregats (3) und eine Auswerteeinheit (7) zum Auswerten des Signals des Sensors (6) aufweist, wobei während einer Fahrbewegung des Arbeitsgerätes mittels der Erfassungseinrichtung (5) die Arbeitsbahn (4) abgetastet und das Signal des Sensors (6) auf das Vorhandensein eines Lebewesens ausgewertet wird, **dadurch gekennzeichnet, dass** mittels einer Energieemissionsvorrichtung (8) ein energiebehaftetes Signal emittiert wird, welches zum Aufschrecken des Lebewesens dient, sodass dieses vom Sensor (6) erfasst werden kann.

## Claims

1. An agricultural implement (1) having at least one working unit (3) and a detection device (5) for detecting living organisms in a working path (4) of the working unit (3), wherein the detection device (5) has at least one sensor (6) for sensing the working path (4) of the working unit (3), wherein an energy emission device (8) is formed, which serves to startle the living creature, **characterized in that** the agricultural implement (1) is configured in such a way that an energy-containing signal is emitted by means of the energy emission device (8), which serves to startle the living creature so that it can be detected by the sensor (6).

2. The agricultural implement (1) according to claim 1, **characterized in that** the energy emission device (8) comprises a sound emission device (9).

3. The agricultural implement (1) according to claim 2, **characterized in that** the sound emission device (9) is configured to emit an acoustic emission in the ultrasonic range.

4. The agricultural implement (1) according to claim 2 or 3, **characterized in that** the sound emission device (9) is configured to emit an acoustic emission with a frequency between 13 kHz and 100 kHz, in particular between 20 kHz and 65 kHz, preferably between 20 kHz and 50 kHz.

5. The agricultural implement (1) according to one of the preceding claims, **characterized in that** the energy emission device (8) comprises a light emission device (10) for emitting optical signals.

6. The agricultural implement (1) according to one of the preceding claims, **characterized in that** a plurality of detection devices (5) are each formed to have at least one sensor (6) for scanning a respective working path (4) of a respective working unit (3), wherein an energy emission device (8) is assigned to each of the detection devices (5).

7. The agricultural implement (1) according to one of the preceding claims, **characterized in that** the detection device (5) and the energy emission device (8) are arranged on a common carrier unit (11), which is arranged on the agricultural implement so that it can be coupled.

8. The agricultural implement (1) according to one of the preceding claims, **characterized in that** a radiation direction (14) of the energy emission device (8) is formed at an angle (15) of between 1° and 45°, in particular between 5° and 35°, preferably between 10° and 20° to the horizontal.

9. The agricultural implement (1) according to one of the preceding claims, **characterized in that** a differential angle (18) between a radiation direction (14) of the energy emission device (8) and a main scanning direction (16) of the detection device (5) is between 50° and 85°, in particular between 60° and 83°, preferably between 70° and 80°.

10. A method for operating an agricultural implement with at least one working unit (3) and a detection device (5) for detecting living organisms in a working path (4) of the working unit (3), wherein the detection device (5) has at least one sensor (6) for scanning the working path (4) of the working unit (3) and an evaluation unit (7) for evaluating the signal of the sensor (6), wherein the working path (4) is scanned by means of the detection device (5) during a travel movement of the implement and the signal of the sensor (6) is evaluated for the presence of a living being, **characterized in that** an energy-containing signal is emitted by means of an energy emission device (8), which serves to startle the living being so that it can be detected by the sensor (6).

## Revendications

1. Outil agricole (1), comprenant au moins une unité de travail (3) et un dispositif de détection (5) permettant de détecter des êtres vivants sur une trajectoire de travail (4) de l'unité de travail (3), dans lequel le dispositif de détection (5) comprend au moins un capteur (6) permettant de balayer la trajectoire de travail (4) de l'unité de travail (3), dans lequel un dispositif d'émission d'énergie (8) servant à effrayer l'être vivant est réalisé, **caractérisé en ce que** l'outil agricole (1) est conçu de telle manière qu'un signal chargé d'énergie et servant à effrayer l'être vivant afin qu'il puisse être détecté par le capteur (6) est émis au moyen du dispositif d'émission d'énergie (8).

2. Outil agricole (1) selon la revendication 1, **caractérisé en ce que** le dispositif d'émission d'énergie (8) comprend un dispositif d'émission sonore (9).

3. Outil agricole (1) selon la revendication 2, **caractérisé en ce que** le dispositif d'émission sonore (9) est conçu pour émettre une émission sonore dans le domaine des ultrasons.

4. Outil agricole (1) selon la revendication 2 ou 3, **caractérisé en ce que** le dispositif d'émission sonore (9) est conçu pour émettre une émission sonore (9) avec une fréquence comprise entre 13 kHz et 100 kHz, en particulier entre 20 kHz et 65 kHz, de manière préférée entre 20 kHz et 50 kHz.

5. Outil agricole (1) selon l'une quelconque des revendications précédentes, **caractérisé en ce que** le dispositif d'émission d'énergie (8) comprend un dispositif d'émission de lumière (10) permettant d'émettre des signaux optiques.

6. Outil agricole (1) selon l'une quelconque des revendications précédentes, **caractérisé en ce qu'**une pluralité de dispositifs de détection (5) sont constitués d'au moins un capteur (6) permettant de balayer respectivement une trajectoire de travail (4) de respectivement une unité de travail (3), dans lequel un dispositif d'émission d'énergie (8) est associé à chacun des dispositifs de détection (5).

7. Outil agricole (1) selon l'une quelconque des revendications précédentes, **caractérisé en ce que** le dispositif de détection (5) et le dispositif d'émission d'énergie (8) sont agencés au niveau d'une unité de support commune (11) qui est agencée de manière à pouvoir être couplée à l'outil agricole.

8. Outil agricole (1) selon l'une quelconque des revendications précédentes, **caractérisé en ce qu'**une direction de rayonnement (14) du dispositif d'émission d'énergie (8) est formée selon un angle (15) compris entre 1° et 45°, en particulier entre 5° et 35°, de manière préférée entre 10° et 20°, par rapport à l'horizontale.

9. Outil agricole (1) selon l'une quelconque des revendications précédentes, **caractérisé en ce qu'**un angle de différence (18) entre une direction de rayonnement (14) du dispositif d'émission d'énergie (8) et une direction de balayage principal (16) du dispositif de détection (5) est compris entre 50° et 85°, en particulier entre 60° et 83°, de manière préférée entre 70° et 80°.

10. Procédé de fonctionnement d'un outil agricole comprenant au moins une unité de travail (3) et un dispositif de détection (5) permettant de détecter des êtres vivants sur une trajectoire de travail (4) de l'unité de travail (3), dans lequel le dispositif de détection (5) présente au moins un capteur (6) permettant de détecter la trajectoire de travail (4) de l'unité de travail (3) et une unité d'évaluation (7) permettant d'évaluer le signal du capteur (6), dans lequel la trajectoire de travail (4) est balayée au moyen du dispositif de détection (5) pendant un mouvement de déplacement de l'outil de travail et le signal du capteur (6) est évalué par rapport à la présence d'un être vivant, **caractérisé en ce qu'**un signal chargé d'énergie et servant à effrayer l'être vivant est émis au moyen d'un dispositif d'émission d'énergie (8), de sorte que ledit être vivant peut être détecté par le capteur (6).
